# EUROPÄISCHE PATENTSCHRIFT

(11) **EP 2 020 677 B1**
(45) Veröffentlichungstag und Bekanntmachung des Hinweises auf die Patenterteilung: **27.06.2012**
(21) Anmeldenummer: 08156265.4
(22) Anmeldetag: 15.05.2008
(51) Int. Cl.: H01K 1/44, H01K 1/34, H01K 3/00, H01J 5/48, H01J 5/50

(54) **Elektrische Lampe mit einem Aussenkolben und einer Einbaulampe sowie ein Verfahren zu deren Herstellung**
Electric lamp with an external piston and a fitted lamp and method for production of same
Lampe électrique dotée d'un piston extérieur et d'une lampe intégrée et son procédé de fabrication

(30) Priorität: 30.07.2007 DE 102007035596
(43) Veröffentlichungstag der Anmeldung: 04.02.2009
(73) Patentinhaber: OSRAM AG, 81543 München (DE)
(72) Erfinder: Stark, Roland, 91809, Wellheim (DE)

(56) Entgegenhaltungen:
- EP-A- 0 109 848
- DE-U1- 9 101 460
- US-A- 3 829 729
- US-A- 4 743 803
- US-A1- 2006 145 583
- US-A1- 2007 035 249

## Beschreibung

### Technisches Gebiet

Die Erfindung betrifft eine einseitig gesockelte elektrische Lampe mit einem in einem Sockel gelagerten Außenkolben und mindestens einer innerhalb des Außenkolbens angeordneten Einbaulampe, vorzugsweise einer Hochvolt-Halogenlampe, und mindestens zwei Stromzuführungsdrähten von dem Sockel zu der Einbaulampe, wobei die Einbaulampe an den Stromzuführungsdrähten gehalten ist.

### Stand der Technik

Halogenglühlampen werden aufgrund ihrer hohen Lebensdauer und der angenehmen Lichtqualität zunehmend herkömmlichen Glühlampen vorgezogen. Um einen möglichst einfachen Ersatz bestehender Glühlampen durch Halogenglühlampen zu ermöglichen und gleichzeitig die optische Anmutung einer herkömmlichen Glühlampe aus ästhetischen oder funktionalen Gründen beizubehalten, werden häufig Lampen verwendet, bei denen die Außenkontur und damit insbesondere der Außenkolben und der Sockel einer herkömmlicher Glühlampe entsprechen, während innerhalb des Außenkolbens eine Halogenglühlampe als Einbaulampe angeordnet ist. Derartige Lampen werden beispielsweise von der OSRAM GmbH unter der Bezeichnung "HALOLUX® CLASSIC" hergestellt und vertrieben.

Um das Erscheinungsbild wie auch die Leuchteigenschaften einer derartigen Lampe denjenigen einer herkömmlichen Glühlampe anzugleichen, muss der Glühdraht der Einbaulampe annähernd an der gleichen Stelle wie der Glühdraht einer vergleichbaren herkömmlichen Glühlampe angeordnet werden. Dazu muss die wesentlich kompaktere Halogenlampe mittels einer Halterung im Außenkolben positioniert werden.

Aus der EP 0 498 256 ist es bekannt, die Einbaulampe direkt an Stromzuführungsdrähten zu befestigen, die im Schraubgewinde des Sockels der Lampe gehalten sind und somit diese Stromzuführungsdrähte als Halterung für die Einbaulampe zu verwenden. Dies ist aber nur mit relativ kurzen Stromzuführungsdrähten möglich, da ansonsten die Lampe sehr erschütterungsempfindlich wird, wobei insbesondere die Schweißverbindungen, mit denen die Einbaulampe an den Stromzuführungsdrähten befestigt ist, sowie die üblicherweise relativ schwach dimensionierten Stromzuführungen der Einbaulampe bruchgefährdet sind. Insbesondere auch beim Einbringen der Stromzuführungsdrähte in den Lampensockel sind die Schweißverbindungen extrem bruchgefährdet. Ein weiteres Problem bei dieser Anordnung besteht darin, dass die Stromzuführungsdrähte vom Sockel zu der Einbaulampe und die aus der Einbaulampe herausführenden Stromzuführungen in direkten Kontakt zu bringen sind, um diese miteinander verschweißen zu können. Dieser Positioniervorgang ist aufwändig und zeitintensiv.

Eine bei den oben erwähnten "HALOLUX® CLASSIC"-Lampen verwendete Technologie zur Positionierung der Einbaulampe besteht darin, einen gläsernen Tellerfuß vorzusehen, der in den Außenkolben eingeschmolzen wird. Der Tellerfuß trägt ein aus Metall gefertigtes Gestell, durch das wiederum die Halogeneinbaulampe gehalten wird. Weiterhin sind in den Tellerfuß Stromzuführungsdrähte eingeschmolzen, an denen die Stromzuführungen der Einbaulampe angeschweißt werden. Dieser Aufbau benötigt für die Durchführung der Stromzuführungsdrähte durch den gläsernen Tellerfuß einen dreiteiligen Aufbau und ist generell durch die Kombination von metallischen und gläsernen Komponenten sehr aufwändig.

Die DE 10 2005 051 076 offenbart eine Halterung für die Einbaulampe, die aus einem metallischen Montageclip besteht, in den die Einbaulampe eingeschoben wird. Der Montageclip ist am gläsernen Fuß des Außenkolbens angebracht, was allerdings sehr aufwändig ist, da der gläserne Fuß ein sehr komplexes Bauteil darstellt, das beispielsweise Pumpstängel und eingeschmolzene Stromzuführungsdrähte umfasst. Weiterhin ist die metallische Halterung optisch sehr auffällig und stört das von einer klassischen Glühbirne bekannte, transparente Erscheinungsbild erheblich.

Aus dem US 4743803A ist eine u-förmige Stromzuführung bekannt, allerdings wird der Sockel der Einbaulampe nicht darin aufgenommen, sie dient lediglich dem Zweck der Abstimmung der Eigenfrequenzen der Filament- und Halterungskonstruktion, um Vibrationen zu reduzieren.

Im US 3829729A ist eine Lampe offenbart, deren Stromdurchführungen um den Sockel herum u-förmig gebogen sind. Diese Lampe wird nicht in einem Aussenkolben gehaltert, so dass die Problematik der mechanischen Stabilität gänzlich entfällt. Die u-förmigen Stromzuführungen dienen lediglich der elektrischen Kontaktierung der Lampe in der Fassung.

### Darstellung der Erfindung

Der Erfindung liegt daher bezüglich der Lampe die Aufgabe zugrunde, eine einseitig gesockelte elektrische Lampe mit einem in einem Sockel gelagerten Außenkolben und mindestens einer innerhalb des Außenkolbens angeordneten Einbaulampe, vorzugsweise einer Hochvolt-Halogenlampe, und mindestens zwei Stromzuführungsdrähten von dem Sockel zu der Einbaulampe, wobei die Einbaulampe an den Stromzuführungsdrähten gehalten ist, zu schaffen, die robust und einfach herstellbar ist.

Die Aufgabe wird erfindungsgemäß dadurch gelöst, dass mindestens einer der Stromzuführungsdrähte im Bereich des einbaulampenseitigen Endes mindestens eine u-förmige Biegung zur Aufnahme eines Sockels der Einbaulampe aufweist. In die u-förmige Biegung kann der Sockel leicht eingeführt und dort fest gehalten werden. Die Schweißverbindung zwischen der Stromzuführung der Einbaulampe und dem Stromzuführungsdraht wird ebenso wie die Einbaulampe selbst von mechanischen Kräften bzw. Kraftspitzen entlastet. U-förmige Biegungen sind einfach und präzise herstellbar. Somit wird eine Möglichkeit geschaffen, die Einbaulampe auf einfachem Weg zuverlässig zu fixieren.

Es ist besonders vorteilhaft, wenn mindestens einer der Stromzuführungsdrähte im Bereich des einbaulampenseitigen Endes mindestens zwei gegenläufige u-förmige Biegungen aufweist. Als gegenläufig werden u-förmige Biegungen angesehen, bei denen die Schenkel der beiden Us annähernd parallel zueinander angeordnet sind, während deren Buchten sich in annähernd entgegengesetzte Richtungen öffnen. Eine zweite u-förmige Biegung stellt eine besonders einfache Möglichkeit dar, eine nach oben, d.h. vom Sockel der Lampe weg offene U-förmige Biegung an den nach unten, d.h. zum Sockel der Lampe hinführenden Stromzuführungsdraht anzubinden, da hierbei auf Schweißverbindungen oder andere Befestigungen verzichtet werden kann.

Es ist von besonderem Vorteil, wenn die mindestens zwei gegenläufigen u-förmigen Biegungen s-förmig angeordnet sind. Eine derartige Folge von Biegungen ist besonders einfach herstellbar.

In einer weiteren Ausführungsform der Erfindung sind die mindestens zwei gegenläufigen u-förmigen Biegungen schleifenförmig angeordnet. Dies ermöglicht auch bei relativ großen Biegeradien der u-förmigen Biegungen eine besonders platzsparende Anordnung, bei der aufgrund des geringen radialen Abstands zwischen dem Sockel der Einbaulampe und dem Stromzuführungsdraht nur sehr geringe Biegemomente auf den Stromzuführungsdraht übertragen werden.

Es ist weiterhin vorteilhaft, wenn mindestens zwei Stromzuführungsdrähte im Bereich des einbaulampenseitigen Endes jeweils mindestens eine u-förmige Biegung zur Aufnahme eines Sockels der Einbaulampe aufweisen und die einbaulampenseitigen Enden von mindestens zwei der Stromzuführungsdrähte auf verschiedenen Seiten des Sockels angeordnet sind. Dadurch wird eine sehr gute Halterung der Einbaulampe erzielt, bei der nur geringe Biegemomente auf die Stromzuführungsdrähte wirken.

In einer weiteren Ausbildung der Erfindung weisen mindestens zwei Stromzuführungsdrähte im Bereich des einbaulampenseitigen Endes jeweils mindestens eine u-förmige Biegung zur Aufnahme eines Sockels der Einbaulampe auf und die einbaulampenseitigen Enden aller Stromzuführungsdrähte sind auf der selben Seite des Sockels der Einbaulampe angeordnet. Eine derartige Anordnung ermöglicht eine relativ einfache Herstellung, da hierbei die Stromzuführungsdrähte einfach, beispielsweise parallel zum Sockel der Einbaulampe, angeordnet werden können und die Einbaulame dann problemlos eingeführt werden kann.

Weiterhin ist es von Vorteil, wenn das einbaulampenseitige Ende mindestens eines der Stromzuführungsdrähte von der Bucht der u-förmigen Biegung weggebogen ist. Ab einem geeignet gewählten Knickpunkt erweitert sich damit der Abstand der Schenkel des U zur Öffnung hin, was ein besonders einfaches Einführen der Einbaulampe in die U-förmige Biegung ermöglicht.

Es ist zweckmäßig, wenn die beiden Schenkel der u-förmigen Biegung annähernd parallel zueinander angeordnet sind. Übliche Einbaulampen haben meist einen Sockel mit praktisch planparallelen Seitenflächen, die bei dieser Ausführungsform besonders gut in der u-förmigen Biegung gehalten werden.

In einer weiteren, besonders vorteilhaften Ausführungsform sind die beiden Schenkel der u-förmigen Biegung zumindest abschnittsweise zueinander geneigt angeordnet, wobei insbesondere der geringste Abstand zwischen den Schenkeln der u-förmigen Biegung im entspannten Zustand vorzugsweise geringfügig kleiner als die dickste Stelle des Sockels der Einbaulampe ist. Als geringfügig ist dabei insbesondere ein Abstand zu betrachten, bei dem der Kraftaufwand beim Einführen der Einbaulampe in die u-förmige Biegung klein genug bleibt, um Beschädigungen an den Komponenten sicher zu vermeiden. Damit ist es möglich, durch die Federwirkung des Stromzuführungsdrahtes den Sockel festzuklemmen und somit die Haltekraft zu erhöhen.

Es ist vorteilhaft, wenn mindestens einer der Stromzuführungsdrähte, vorzugsweise im Bereich des einbaulampenfernen Endes, kreisförmig und/oder schraubenförmig und/oder spiralförmig gewendelt ist. Dies vereinfacht die Befestigung der Stromzuführungsdrähte in der Lampe, insbesondere in deren zylindrischem Sockel.

Zweckmäßigerweise ist die kreisförmige und/oder schraubenförmige und/oder spiralförmige Wendelung mindestens eines Stromzuführungsdrahtes in eine kreisförmige Nut und/oder ein Gewinde des Sockels der Lampe einpassbar. Dies ermöglicht eine einfache Fixierung des Stromzuführungsdrahtes insbesondere auch in axialer Richtung.

Weiterhin ist es vorteilhaft, wenn das Ende mindestens einer, vorzugsweise des die kreisförmige und/oder schraubenförmige und/oder spiralförmige Wendelung umfassenden Stromzuführungsdrahtes näher an der Einbaulampe liegt als der von der Einbaulampe an weitesten entfernte Punkt des Stromzuführungsdrahtes. Dadurch ist die Wendelung quasi "nach oben" geführt. Dies erleichtert das Einführen, insbesondere das Einschrauben des Stromzuführungsdrahtes in den Sockel, da das Ende der Wendelung sich beim Einführen in den Sockel nicht verhaken kann und Bewegungen in Gegenrichtung, die zu einem Lösen des Stromzuführungsdrahtes führen würden, durch Verhaken verhindert.

Es ist ebenfalls von Vorteil, wenn der Durchmesser der Wendelung in nicht eingebautem Zustand zur einbaulampennahen Seite hin zunimmt. Auch dies erleichtert das Einführen des Stromzuführungsdrahtes in den Sockel der Lampe und ermöglicht eine gewisse Klemmwirkung durch das Zusammendrücken der Wendelung beim Einführen, was eine besonders gute Fixierung des Stromzuführungsdrahtes ermöglicht. Eine zusätzliche Verbindung von Sockel und Stromzuführungsdraht, beispielsweise mittels Löten, Kleben oder Schweißen, ist somit nicht erforderlich.

Zweckmäßigerweise weist mindestens ein Schenkel der u-förmigen Biegung, vorzugsweise der dem einbaulampenseitigen Ende ferne Schenkel, annähernd die gleiche Länge auf wie der Sockel der Einbaulampe. Dadurch wird der Sockel besonders gut gehalten und insbesondere ein Verkippen zuverlässig verhindert. Die Anlagefläche des Stromzuführungsdrahtes am Sockel wird maximiert, was insbesondere das Auftreten von mechanischen Spannungsspitzen in dem gläsernen Sockel verhindert.

Es ist ebenfalls zweckmäßig, wenn mindestens einer der Stromzuführungsdrähte mit mindestens einer Stromzuführung der Einbaulampe durch Schweißung verbunden ist. Dadurch wird eine zuverlässige mechanische wie elektrische Verbindung hergestellt und die Einbaulampe zusätzlich sowohl gegen seitliches Verschieben in wie auch Herausfallen in axialer Richtung aus der u-förmigen Biegung gesichert.

Indem die Einbaulampe einen Sockel mit doppel-T-förmigem Querschnitt aufweist und an jedem Flansch des Sockels auf der Innenseite jeweils ein u-förmiger Stromzuführungsdraht anliegt, wird die Einbaulampe sicher gegen seitliche Verschiebungen gesichert.

Vorteilhafterweise wird die Lampe mit einem Verfahren nach Anspruch 17 hergestellt. Bei diesem Verfahren sind sehr wenige und einfach durchführbare Arbeitsschritte notwendig, weshalb es sehr effizient und kostengünstig durchführbar ist.

### Kurze Beschreibung der Zeichnungen

Im Folgenden soll die Erfindung anhand eines Ausführungsbeispiels näher erläutert werden. Gleiche beziehungsweise funktional gleiche Bauteile sind mit gleichen Bezugszahlen gekennzeichnet. Die Figuren zeigen:
- Fig. 1: eine erfindungsgemäße Lampe in perspektivischer Ansicht,
- Fig. 2: die Einbaulampe mit Halterung in einer Detailansicht,
- Fig. 3: eine Explosionszeichnung einer erfindungsgemäßen Lampe.

### Bevorzugte Ausführung der Erfindung

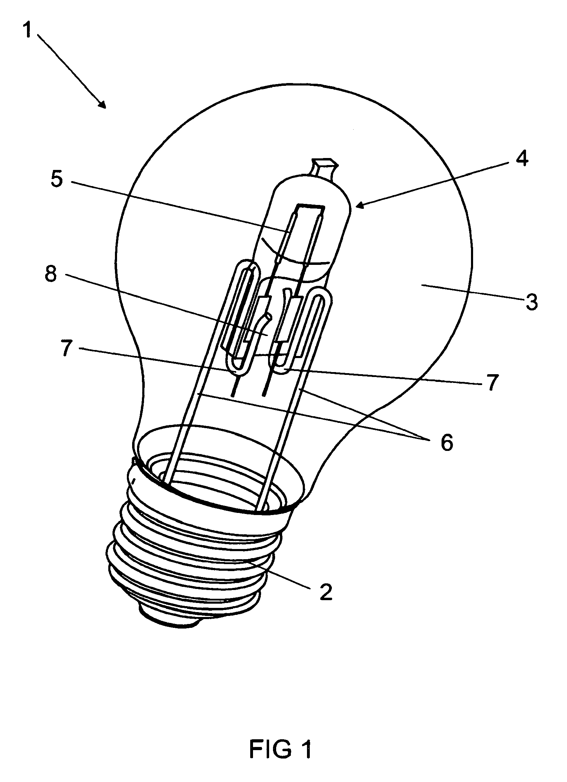

Figur 1 zeigt eine erfindungsgemäße Lampe 1 in einer perspektivischen Darstellung. In einem Sockel 2 des handelsüblichen Typs E27 ist ein Außenkolben 3 vom Typ A55 gehalten. Innerhalb des Außenkolbens 3 ist eine Einbaulampe 4 so angeordnet, dass sich ein Glühdraht 5 der Einbaulampe 4 annähernd an der Stelle innerhalb des Außenkolbens 3 befindet, an der bei einer herkömmlichen Glühlampe ebenfalls der Glühdraht angeordnet ist. Die Einbaulampe 4 ist als so genannte Hochvolt-Halogenlampe in Quetschnoppentechnik ausgeführt und als solche aus dem Stand der Technik bekannt. Die Einbaulampe 4 ist in zwei Stromzuführungsdrähten 6 gehalten, die jeweils an ihrem einbaulampenseitigen Ende s-förmig gebogen sind. Dadurch entsteht jeweils eine u-förmige Biegung 7, in der der Sockel 8 der Einbaulampe 4 gehalten ist.

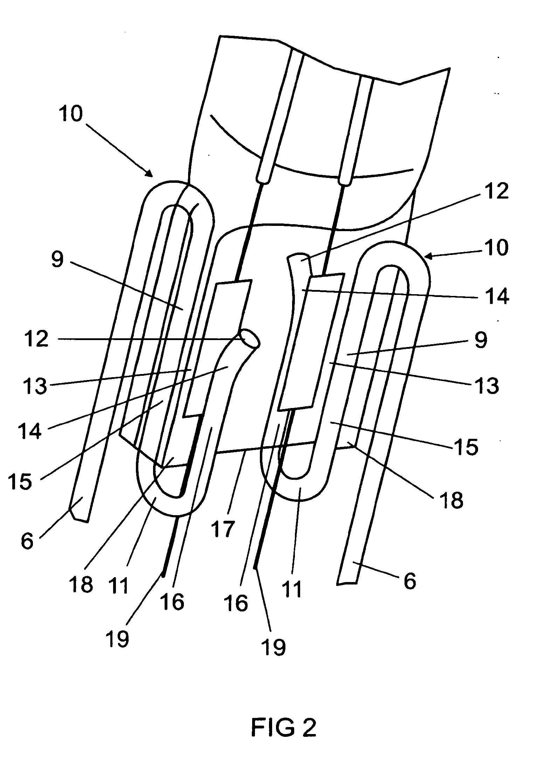

Details des Aufbaus sind in Figur 2 besonders deutlich erkennbar. Die Stromzuführungsdrähte 6 sind vom Sockel 2 der Lampe 1 kommend zunächst einmal umgebogen, so dass der Drahtabschnitt 9 in Richtung des Sockels 2 zeigt. In einem Abstand, der in etwa der Länge des Sockels 8 der Einbaulampe 4 entspricht, ist der Stromzuführungsdraht 6 erneut umgebogen, so dass gegenläufig zur ersten U-förmigen Biegung 10 eine zur Einbaulampe hin geöffnete zweite U-förmige Biegung 11 gebildet wird. Die beiden Stromzuführungsdrähte 6 sind dabei so angeordnet, dass ihre Enden 12 auf verschiedenen Seiten des Sockels 8 der Einbaulampe 4 angeordnet sind. Dadurch sind die beiden die Einbaulampe 4 tragenden Stromzuführungsdrähte 6 in Relation zum Sockel 8 der Einbaulampe 4 diagonal gegenüberliegend angeordnet, wodurch das Auftreten von Biegemomenten in den Stromzuführungsdrähten 6, wie dies bei einer Anordnung der Enden 12 der Stromzuführungsdrähte 6 auf der gleichen Seite des Sockels 8 der Einbaulampe 4 der Fall wäre, vermieden beziehungsweise deutlich reduziert wird.

Direkt an den Enden 12 sind die Stromzuführungsdrähte 6 von der jeweiligen Bucht 13 der u-förmigen Biegung 11 weggebogen, so dass ein Knickpunkt 14 entsteht. Dadurch wird das Einführen der Einbaulampe 4 in die u-förmigen Biegungen 11 bei der Montage der Lampe 1 deutlich erleichtert, da kleine Maßtoleranzen der beteiligten Komponenten ausgeglichen werden können. Die beiden Schenkel 15, 16 der u-förmigen Biegungen 11 der Stromzuführungsdrähte 6 sind vor Einbau der Einbaulampe 4 leicht zueinander geneigt, so dass bei Einschieben der Einbaulampe 4 zwar zunächst ein gewisser Widerstand überwunden werden muss, die Einbaulampe 4 im montierten Zustand dann aber sehr sicher sitzt.

Im vorliegenden Ausführungsbeispiel sind die Schenkel 15, 16 der u-förmigen Biegungen 11 nach dem Einführen der Einbaulampe 4 praktisch parallel ausgerichtet und liegen vollflächig an dem Sockel 8 der Einbaulampe 4 an. Es sind aber auch Ausführungsformen denkbar, bei denen der endnahe Schenkel 16 nur am Knickpunkt 14 am Sockel 8 der Einbaulampe 4 anliegt. Ebenso sind Ausführungsformen denkbar, bei denen die Schenkel 15, 16 der u-förmigen Biegung 11 auch im unbelasteten Zustand, d.h. wenn die Einbaulampe 4 noch nicht montiert ist, annähernd parallel angeordnet sind. Die Klemmwirkung der u-förmigen Biegung 11 ist bei dieser Ausführung zwar etwas schwächer als bei dem in der Figur gezeigten Ausführungsbeispiel, aber dafür werden hohe mechanische Beanspruchungen des Sockels 8 der Einbaulampe 4 vermieden.

Der Sockel 8 der Einbaulampe 4 ist doppel-T-förmig ausgeführt mit einem Steg 17, der zwei außen liegende Flansche 18 verbindet. Der Abstand der Stromzuführungsdrähte 6 in Querrichtung voneinander ist so gewählt, dass die Stromzuführungsdrähte 6 im Bereich der u-förmigen Biegung 11 an den Flanschen 18 anliegen. Dadurch kann sich die Einbaulampe 4 nicht seitlich gegenüber den Stromzuführungsdrähten 6 bewegen. Zusätzlich sind die Stromzuführungsdrähte 6 mit den Stromzuführungen 19 der Einbaulampe 4 durch Schweißung verbunden. Dadurch wird nicht nur eine hervorragende und gegenüber Korrosion wie mechanischen Beanspruchungen unempfindliche elektrische Verbindung hergestellt, sondern auch die Einbaulampe 4 gegenüber den Stromzuführungsdrähten 6 mechanisch zusätzlich fixiert.

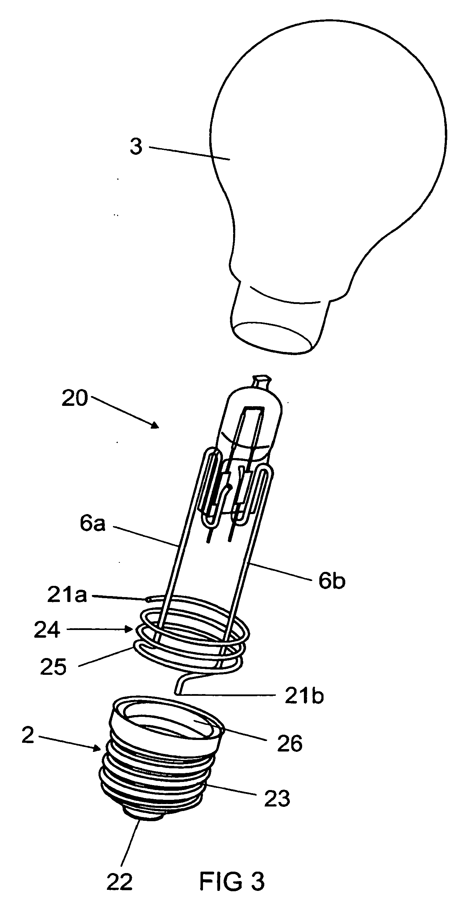

Der weitere Aufbau der Lampe 1 sowie deren Herstellung werden in Figur 3, die eine Explosionszeichnung einer erfindungsgemäßen Lampe 1 darstellt, deutlich. Zwischen dem Außenkolben 3 und dem Sockel 2 ist die Einheit 20 aus Einbaulampe 4 und Stromzuführungsdrähten 6 gezeigt. Die Einbaulampe 4 ist in den Stromzuführungsdrähten 6a, 6b wie oben beschrieben gehalten. Im Bereich der sockelseitigen Enden 21a, 21b der Stromzuführungsdrähte 6a, 6b ist der mit einem Mittenkontakt 22 zu verbindende Stromzuführungsdraht 6b zweifach in einem Winkel von 90° gebogen. Der mit dem Gewinde 23 des Sockels 2 zu verbindende Stromzuführungsdraht 6a ist schraubenförmig gewendelt, wobei die Wendel 24 und damit auch das einbaulampenferne Ende 21a des Stromzuführungsdrahtes 6a oberhalb, d.h. näher an der Einbaulampe 4 liegt als der davon am weitesten entfernte Punkt 25. Damit wird beim Eindrehen der Wendel 24 in das Gewinde 23 vermieden, dass sich das Ende 21a des Stromzuführungsdrahtes 6a im Gewinde 23 des Sockels 2 verkantet. Ist die Wendel 24 in den Sockel 2 eingedreht, ist eine Gegenbewegung nicht mehr möglich, da sich dann das Ende 21a des Stromzuführungsdrahtes 6a im Gewinde 23 des Sockels 2 verkantet und weitere Bewegungen in diese Richtung unterbindet. Dieser Effekt wird noch verstärkt, indem der Durchmesser der Wendel 24 im nicht eingebauten Zustand von dem von der Einbaulampe 4 am weitesten entfernten Punkt 25 zur Einbaulampe 4 hin zunimmt, was zunächst ein einfaches Eindrehen ermöglicht, während sich mit zunehmender Eindringtiefe der Widerstand erhöht. Auch die Klemmwirkung des einbaulampenfernen Endes 21a des Stromzuführungsdrahtes 6a wird damit verstärkt.

Bei der Montage der Lampe 1 werden zunächst die Stromzuführungsdrähte 6 vorgebogen und die Einbaulampe 4 wird in die u-förmigen Biegungen 11 eingeführt und mit den Stromzuführungsdrähten 6 verschweißt. Diese in Figur 3 dargestellte Einheit 20 aus Einbaulampe 4 und Stromzuführungsdrähten 6 wird in den Sockel 2 der Lampe 1 eingeschraubt, der bereits mit Kitt 26 versehen ist. Danach wird der Außenkolben 3 auf den Sockel 2 aufgebracht und beide durch Erhitzen des vorab auf den Sockel 2 aufgebrachten Kitts 26 verbunden. Abschließend wird der mit dem Mittenkontakt 22 zu verbindende Stromzuführungsdraht 6a abgelängt und mit dem Sockel 2 durch Lötung verbunden.

Selbstverständlich sind auch noch andere Ausführungsformen der Erfindung denkbar. So könnten beispielsweise die Stromzuführungsdrähte 6 anstatt einer s-förmigen Anordnung der u-förmigen Biegungen 10, 11 eine schleifenförmige Anordnung aufweisen, d.h. es ergäbe sich eine Ansicht gemäß dem griechischen Buchstaben ϕ. Auch ist es denkbar, dass die einbaulampenseitigen Enden 12 der Stromzuführungsdrähte 6 auf der gleichen Seite des Sockels 8 der Einbaulampe 4 angeordnet sind, was insbesondere die Ausrichtung der Stromzuführungsdrähte 6 und des Sockels 8 der Einbaulampe 4 bei der Montage erleichtert. Anstelle einer Schweißverbindung zwischen den Stromzuführungen 19 und den Stromzuführungsdrähten 6 der Einbaulampe 4 sind auch andere Verbindungstechniken denkbar, beispielsweise durch eine Lötung oder durch Umbiegen der Stromzuführungen 19 der Einbaulampe 4.

Weist die Einbaulampe 4 am Sockel 8 eine Riffelung auf, so kann der Knickpunkt 14 der Stromzuführungsdrähte 6 so platziert werden, dass dieser in eine Vertiefung der Riffelung eingreift und so die Einbaulampe 4 auch in axialer Richtung zuverlässig hält.

Anstelle des in den Ausführungsbeispielen gezeigten und für eine Allgebrauchsglühlampe typischen Außenkolbens 3 mit der Bezeichnung A55 sind selbstverständlich auch andere Kolbenformen, wie beispielsweise die Typen A60, R63, R80 oder G95 denkbar, wie auch anstelle des gezeigten Schraubsockels 2 vom Typ E27 andere Sockelgrößen wie beispielsweise E14 oder E40 sowie andere Sockeltypen wie beispielsweise Bajonett- oder Stecksockel möglich sind.

## Patentansprüche

1. Einseitig gesockelte elektrische Lampe (1) mit einem in einem Sockel (2) gelagerten Außenkolben (3) und mindestens einer innerhalb des Außenkolbens (3) angeordneten Einbaulampe (4), vorzugsweise einer Hochvolt-Halogenlampe, und mindestens zwei Stromzuführungsdrähten (6) von dem Sockel (2) zu der Einbaulampe (4), wobei die Einbaulampe (4) an den Stromzuführungsdrähten (6) gehalten ist, **dadurch gekennzeichnet, dass** mindestens einer der Stromzuführungsdrähte (6) im Bereich des einbaulampenseitigen Endes (12) mindestens eine u-förmige Biegung (11) zur Aufnahme eines Sockels (8) der Einbaulampe (4) aufweist.

2. Einseitig gesockelte elektrische Lampe (1) nach Anspruch 1, **dadurch gekennzeichnet, dass** mindestens einer der Stromzuführungsdrähte (6) im Bereich des einbaulampenseitigen Endes (12) mindestens zwei gegenläufige u-förmige Biegungen (10, 11) aufweist.

3. Einseitig gesockelte elektrische Lampe (1) nach Anspruch 1 oder 2, **dadurch gekennzeichnet, dass** die mindestens zwei gegenläufigen u-förmigen Biegungen (10, 11) s-förmig angeordnet sind.

4. Einseitig gesockelte elektrische Lampe (1) nach einem der Ansprüche 1 oder 2, **dadurch gekennzeichnet, dass** die mindestens zwei gegenläufigen u-förmigen Biegungen (10, 11) schleifenförmig angeordnet sind.

5. Einseitig gesockelte elektrische Lampe (1) nach einem der Ansprüche 1 bis 4, **dadurch gekennzeichnet, dass** mindestens zwei Stromzuführungsdrähte (6) im Bereich des einbaulampenseitigen Endes (12) jeweils mindestens eine u-förmige Biegung (11) zur Aufnahme eines Sockels (8) der Einbaulampe (4) aufweisen und die einbaulampenseitigen Enden (12) von mindestens zwei der Stromzuführungsdrähte (6) auf verschiedenen Seiten des Sockels (8) angeordnet sind.

6. Einseitig gesockelte elektrische Lampe (1) nach einem der Ansprüche 1 bis 5, **dadurch gekennzeichnet, dass** mindestens zwei Stromzuführungsdrähte (6) im Bereich des einbaulampenseitigen Endes (12) jeweils mindestens eine u-förmige Biegung (11) zur Aufnahme eines Sockels (8) der Einbaulampe (4) aufweisen und die einbaulampenseitigen Enden (12) aller Stromzuführungsdrähte (6) auf der selben Seite des Sockels (8) der Einbaulampe (4) angeordnet sind.

7. Einseitig gesockelte elektrische Lampe (1) nach einem der Ansprüche 1 bis 6, **dadurch gekennzeichnet, dass** das einbaulampenseitige Ende (12) mindestens eines der Stromzuführungsdrähte (6) von der Bucht (13) der u-förmigen Biegung (11) weggebogen ist.

8. Einseitig gesockelte elektrische Lampe (1) nach einem der Ansprüche 1 bis 7, **dadurch gekennzeichnet, dass** die beiden Schenkel (15, 16) der u-förmigen Biegung (11) annähernd parallel zueinander angeordnet sind.

9. Einseitig gesockelte elektrische Lampe (1) nach einem der Ansprüche 1 bis 8, **dadurch gekennzeichnet, dass** die beiden Schenkel (15, 16) der u-förmigen Biegung (11) zumindest abschnittsweise zueinander geneigt angeordnet sind, wobei insbesondere der geringste Abstand zwischen den Schenkeln (15, 16) der u-förmigen Biegung (11) im entspannten Zustand vorzugsweise geringfügig kleiner als die dickste Stelle des Sockels (8) der Einbaulampe (4) ist.

10. Einseitig gesockelte elektrische Lampe (1) nach einem der Ansprüche 1 bis 9, **dadurch gekennzeichnet, dass** mindestens einer der Stromzuführungsdrähte (6a), vorzugsweise im Bereich des einbaulampenfernen Endes (21a), kreisförmig und/oder schraubenförmig und/oder spiralförmig gewendelt ist.

11. Einseitig gesockelte elektrische Lampe (1) nach Anspruch 10, **dadurch gekennzeichnet, dass** die kreisförmige und/oder schraubenförmige und/oder spiralförmige Wendel (24) mindestens eines Stromzuführungsdrahtes (6a) in eine kreisförmige Nut und/oder ein Gewinde (23) des Sockels (2) der Lampe (1) einpassbar ist.

12. Einseitig gesockelte elektrische Lampe (1) nach einem der Ansprüche 1 bis 10, **dadurch gekennzeichnet, dass** das Ende (21a) mindestens eines, vorzugsweise des die kreisförmige und/oder schraubenförmige und/oder spiralförmige Wendel (24) umfassenden Stromzuführungsdrahtes (6a) näher an der Einbaulampe (4) liegt als der von der Einbaulampe (4) an weitesten entfernte Punkt (25) des Stromzuführungsdrahtes (6a).

13. Einseitig gesockelte elektrische Lampe (1) nach einem der Ansprüche 1 bis 12, **dadurch gekennzeichnet, dass** der Durchmesser der Wendel (24) in nicht eingebautem Zustand zur einbaulampennahen Seite hin zunimmt.

14. Einseitig gesockelte elektrische Lampe (1) nach einem der Ansprüche 1 bis 13, **dadurch gekennzeichnet, dass** mindestens ein Schenkel (15, 16) der u-förmigen Biegung (11), vorzugsweise der dem einbaulampenseitigen Ende (12) ferne Schenkel (15), annähernd die gleiche Länge aufweist wie der Sockel (8) der Einbaulampe (4).

15. Einseitig gesockelte elektrische Lampe (1) nach einem der Ansprüche 1 bis 14, **dadurch gekennzeichnet, dass** mindestens ein Stromzuführungsdraht (6) mit mindestens einer Stromzuführung (19) der Einbaulampe (4) durch Schweißung verbunden ist.

16. Einseitig gesockelte elektrische Lampe (1) nach einem der Ansprüche 1 bis 15, **dadurch gekennzeichnet, dass** die Einbaulampe (4) einen Sockel (8) mit doppel-T-förmigem Querschnitt aufweist und an jedem Flansch (18) des Sockels (8) auf der Innenseite jeweils ein u-förmiger Stromzuführungsdraht (6) anliegt.

17. Verfahren zur Herstellung einer einseitig gesockelten elektrischen Lampe (1) nach einem der vorhergehenden Ansprüche, **gekennzeichnet durch** folgende Schritte:
a) die Stromzuführungsdrähte (6) werden vorgebogen,
b) die Einbaulampe (4) wird in die u-förmige Biegung (11) der Stromzuführungsdrähte (6) eingeführt und mit den Stromzuführungsdrähten (6) verbunden, vorzugsweise verschweißt,
c) die Einheit (20) aus Einbaulampe (4) und Stromzuführungsdrähten (6) wird in den Sockel (2) der Lampe (1) eingeschraubt,
d) der Außenkolben (3) wird auf den Sockel (2) aufgebracht und vorzugsweise mit auf dem Sockel (2) aufgebrachtem Kitt (26) verbunden,
e) die Stromzuführungsdrähte (6b) werden abgelängt und mit dem Mittenkontakt (22) des Sockels (2) vorzugsweise **durch** Lötung verbunden.

## Claims

1. Electric lamp (1) with a base at one end and with an outer bulb (3), mounted in a base (2), and at least one integral lamp (4), preferably a high-voltage halogen lamp, which is arranged within the outer bulb (3), and at least two power supply wires (6) from the base (2) to the integral lamp (4), the integral lamp (4) being held on the power supply wires (6), **characterized in that** at least one of the power supply wires (6) has, in the region of the end (12) on the integral-lamp side, at least one u-shaped bend (11) for accommodating a base (8) of the integral lamp (4).

2. Electric lamp (1) with a base at one end according to Claim 1, **characterized in that** at least one of the power supply wires (6) has, in the region of the end (12) on the integral-lamp side, at least two u-shaped bends (10, 11) running in opposite directions.

3. Electric lamp (1) with a base at one end according to Claim 1 or 2, **characterized in that** the at least two u-shaped bends (10, 11) running in opposite directions are arranged in the form of an s.

4. Electric lamp (1) with a base at one end according to either of Claims 1 and 2, **characterized in that** the at least two u-shaped bends (10, 11) running in opposite directions are arranged in the form of a loop.

5. Electric lamp (1) with a base at one end according to one of Claims 1 to 4, **characterized in that** at least two power supply wires (6) have, in the region of the end (12) on the integral-lamp side, in each case at least one u-shaped bend (11) for accommodating a base (8) of the integral lamp (4), and the ends (12) on the integral-lamp side of at least two of the power supply wires (6) are arranged on different sides of the base (8).

6. Electric lamp (1) with a base at one end according to one of Claims 1 to 5, **characterized in that** at least two power supply wires (6) have, in the region of the end (12) on the integral-lamp side, in each case at least one u-shaped bend (11) for accommodating a base (8) of the integral lamp (4), and the ends (12) on the integral-lamp side of all of the power supply wires (6) are arranged on the same side of the base (8) of the integral lamp (4).

7. Electric lamp (1) with a base at one end according to one of Claims 1 to 6, **characterized in that** the end (12) on the integral-lamp side of at least one of the power supply wires (6) is bent away from the bay (13) of the u-shaped bend (11).

8. Electric lamp (1) with a base at one end according to one of Claims 1 to 7, **characterized in that** the two limbs (15, 16) of the u-shaped bend (11) are arranged approximately parallel to one another.

9. Electric lamp (1) with a base at one end according to one of Claims 1 to 8, **characterized in that** the two limbs (15, 16) of the u-shaped bend (11) are arranged such that at least sections thereof are inclined towards one another, in particular with the shortest distance between the limbs (15, 16) of the u-shaped bend (11) in the unstressed state being preferably slightly smaller than the thickest point of the base (8) of the integral lamp (4).

10. Electric lamp (1) with a base at one end according to one of Claims 1 to 9, **characterized in that** at least one of the power supply wires (6a) is coiled in the form of a circle and/or helix and/or spiral, preferably in the region of the end (21a) remote from the integral lamp.

11. Electric lamp (1) with a base at one end according to Claim 10, **characterized in that** the circular and/or helical and/or spiral coil (24) of at least one power supply wire (6a) can be fit into a circular groove and/or a thread (23) of the base (2) of the lamp (1).

12. Electric lamp (1) with a base at one end according to one of Claims 1 to 10, **characterized in that** the end (21a) of at least one power supply wire (6a), preferably the power supply wire (6a) comprising the circular and/or helical and/or spiral coil (24), is positioned closer to the integral lamp (4) than that point (25) of the power supply wire (6a) which is furthest removed from the integral lamp (4).

13. Electric lamp (1) with a base at one end according to one of Claims 1 to 12, **characterized in that** the diameter of the coil (24) in the uninstalled state increases towards the side close to the integral lamp.

14. Electric lamp (1) with a base at one end according to one of Claims 1 to 13, **characterized in that** at least one limb (15, 16) of the u-shaped bend (11), preferably the limb (15) remote from the end (12) on the integral-lamp side, is of approximately the same length as the base (8) of the integral lamp (4).

15. Electric lamp (1) with a base at one end according to one of Claims 1 to 14, **characterized in that** at least one power supply wire (6) is connected to at least one power supply line (19) of the integral lamp (4) by means of welding.

16. Electric lamp (1) with a base at one end according to one of Claims 1 to 15, **characterized in that** the integral lamp (4) has a base (8) with a cross section in the form of a double T, and in each case one u-shaped power supply wire (6) bears against each flange (18) of the base (8) on the inside.

17. Method for producing an electric lamp (1) with a base at one end according to one of the preceding claims, **characterized by** the following steps:
a) the power supply wires (6) are bent in advance;
b) the integral lamp (4) is inserted into the u-shaped bend (11) of the power supply wires (6) and connected, preferably welded, to the power supply wires (6);
c) the unit (20) comprising the integral lamp (4) and the power supply wires (6) is screwed into the base (2) of the lamp (1);
d) the outer bulb (3) is applied to the base (2) and is preferably connected using cement (26) applied to the base (2);
e) the power supply wires (6b) are cut to length and connected to the central contact (22) of the base (2), preferably by means of soldering.

## Revendications

1. Lampe électrique (1) à culot unilatéral comprenant une ampoule extérieure (3) montée dans un culot (2) et au moins une lampe intégrée (4) disposée dans l'ampoule extérieure (3), de préférence une lampe à halogène de haut voltage, ainsi qu'au moins deux fils d'alimentation (6) allant du culot (2) à la lampe intégrée (4), la lampe intégrée (4) étant maintenue sur les fils d'alimentation (6), **caractérisée en ce qu'**au moins l'un des fils d'alimentation (6) présente au niveau de l'extrémité (12) côté lampe intégrée au moins un pli en U (11) destiné à recevoir un culot (8) de la lampe intégrée (4).

2. Lampe électrique (1) à culot unilatéral selon la revendication 1, **caractérisée en ce qu'**au moins l'un des fils d'alimentation (6) présente au niveau de l'extrémité (12) côté lampe intégrée au moins deux plis inversés en U (10, 11).

3. Lampe électrique (1) à culot unilatéral selon la revendication 1 ou 2, **caractérisée en ce que** lesdits au moins deux plis inversés en U (10, 11) sont disposés en forme de S.

4. Lampe électrique (1) à culot unilatéral selon l'une des revendications 1 ou 2, **caractérisée en ce que** lesdits au moins deux plis inversés en U (10, 11) sont disposés en forme de boucle.

5. Lampe électrique (1) à culot unilatéral selon l'une des revendications 1 à 4, **caractérisée en ce qu'**au moins deux fils d'alimentation (6) présentent au niveau de l'extrémité (12) côté lampe intégrée chacun au moins un pli en U (11) destiné à recevoir un culot (8) de la lampe intégrée (4) et **en ce que** les extrémités (12) côté lampe intégrée d'au moins deux des fils d'alimentation (6) sont disposées sur des côtés différents du culot (8).

6. Lampe électrique (1) à culot unilatéral selon l'une des revendications 1 à 5, **caractérisée en ce qu'**au moins deux fils d'alimentation (6) présentent au niveau de l'extrémité (12) côté lampe intégrée chacun au moins un pli en U (11) destiné à recevoir un culot (8) de la lampe intégrée (4) et **en ce que** les extrémités (12) côté lampe intégrée de tous les fils d'alimentation (6) sont disposées du même côté du culot (8) de la lampe intégrée (4).

7. Lampe électrique (1) à culot unilatéral selon l'une des revendications 1 à 6, **caractérisée en ce que** l'extrémité (12) côté lampe intégrée d'au moins d'un des fils d'alimentation (6) est repliée à l'opposé du creux (13) du pli en U (11).

8. Lampe électrique (1) à culot unilatéral selon l'une des revendications 1 à 7, **caractérisée en ce que** les deux branches (15, 16) du pli en U (11) sont disposées à peu près parallèlement l'une à l'autre.

9. Lampe électrique (1) à culot unilatéral selon l'une des revendications 1 à 8, **caractérisée en ce que** les deux branches (15, 16) du pli en U (11) sont disposées au moins par portions de manière inclinée l'une vers l'autre, en particulier la distance la plus faible entre les branches (15, 16) du pli en U (11) à l'état détendu étant de préférence légèrement plus petite que l'endroit le plus épais du culot (8) de la lampe intégrée (4).

10. Lampe électrique (1) à culot unilatéral selon l'une des revendications 1 à 9, **caractérisée en ce qu'**au moins l'un des fils d'alimentation (6a), de préférence au niveau de l'extrémité (21a) éloignée de la lampe intégrée, est enroulé en cercle et/ou en hélice et/ou en spirale.

11. Lampe électrique (1) à culot unilatéral selon la revendication 10, **caractérisée en ce que** l'enroulement (24) en cercle et/ou en hélice et/ou en spirale d'au moins un fil d'alimentation (6a) est emboîtable dans une rainure circulaire et/ou un filetage (23) du culot (2) de la lampe (1).

12. Lampe électrique (1) à culot unilatéral selon l'une des revendications 1 à 10, **caractérisée en ce que** l'extrémité (21a) d'au moins un fil d'alimentation (6a), de préférence du fil d'alimentation comprenant l'enroulement (24) en cercle et/ou en hélice et/ou en spirale, est plus proche de la lampe intégrée (4) que le point (25) le plus éloigné de la lampe intégrée (4) du fil d'alimentation (6a).

13. Lampe électrique (1) à culot unilatéral selon l'une des revendications 1 à 12, **caractérisée en ce que** le diamètre de l'enroulement (24) à l'état non monté augmente en allant vers le côté proche de la lampe intégrée.

14. Lampe électrique (1) à culot unilatéral selon l'une des revendications 1 à 13, **caractérisée en ce qu'**au moins une branche (15, 16) du pli en U (11), de préférence la branche (15) éloignée de l'extrémité (12) côté lampe intégrée, présente à peu près la même longueur que le culot (8) de la lampe intégrée (4).

15. Lampe électrique (1) à culot unilatéral selon l'une des revendications 1 à 14, **caractérisée en ce qu'**au moins un fil d'alimentation (6) est relié par soudage à au moins une alimentation (19) de la lampe intégrée (4).

16. Lampe électrique (1) à culot unilatéral selon l'une des revendications 1 à 15, **caractérisée en ce que** la lampe intégrée (4) présente un culot (8) de section en double T et **en ce que** sur chaque ailette (18) du culot (8) un fil d'alimentation en U (6) s'appuie contre la face interne.

17. Procédé de fabrication d'une lampe électrique (1) à culot unilatéral selon l'une des revendications précédentes, **caractérisé par** les étapes suivantes :
a) les fils d'alimentation (6) sont prépliés,
b) la lampe intégrée (4) est insérée dans le pli en U (11) des fils d'alimentation (6) et reliée, de préférence soudée aux fils d'alimentation (6),
c) l'ensemble (20) constitué de la lampe intégrée (4) et des fils d'alimentation (6) est vissé dans le culot (2) de la lampe (1),
d) l'ampoule extérieure (3) est posée sur le culot (2) et solidarisée de préférence avec du mastic (26) appliqué sur le culot (2),
e) les fils d'alimentation (6a) sont coupés à longueur et reliés au contact central (22) du culot (2), de préférence par brasage.
